(19) **Europäisches Patentamt**
**European Patent Office**
**Office européen des brevets**

(11) **EP 3 432 396 B1**

(12) **EUROPEAN PATENT SPECIFICATION**

(45) Date of publication and mention
of the grant of the patent:
**25.10.2023 Bulletin 2023/43**

(21) Application number: **17766118.8**

(22) Date of filing: **06.02.2017**

(51) International Patent Classification (IPC):
**H01M 8/0243** (2016.01)    **H01M 8/0239** (2016.01)
**H01M 8/1034** (2016.01)    **C08G 59/62** (2006.01)
**H01M 8/0234** (2016.01)    **H01M 8/1018** (2016.01)

(52) Cooperative Patent Classification (CPC):
**H01M 8/0234; H01M 8/0239; H01M 8/0243;**
H01M 2008/1095; Y02E 60/50; Y02P 70/50

(86) International application number:
**PCT/JP2017/004141**

(87) International publication number:
**WO 2017/159110 (21.09.2017 Gazette 2017/38)**

(54) **POROUS SEPARATOR FOR FUEL CELLS**

PORÖSER SEPARATOR FÜR BRENNSTOFFZELLEN

SÉPARATEUR POREUX POUR PILES À COMBUSTIBLE

(84) Designated Contracting States:
**DE FR PL SE**

(30) Priority: **15.03.2016   JP 2016050925**

(43) Date of publication of application:
**23.01.2019   Bulletin 2019/04**

(73) Proprietor: **Nisshinbo Chemical Inc.**
**Tokyo 103-8650 (JP)**

(72) Inventors:
• **TANNO Fumio**
**Chiba-shi**
**Chiba 267-0056 (JP)**

• **OKAMOTO Shusuke**
**Chiba-shi**
**Chiba 267-0056 (JP)**

(74) Representative: **Mewburn Ellis LLP**
**Aurora Building**
**Counterslip**
**Bristol BS1 6BX (GB)**

(56) References cited:
**EP-A1- 2 763 223          WO-A1-98/53514**
**WO-A1-2005/064721     WO-A1-2013/047485**
**JP-A- 2008 123 828       JP-B1- 5 880 649**
**US-A1- 2003 104 257**

**Description**

TECHNICAL FIELD

The present invention relates to a porous separator for fuel cells.

BACKGROUND ART

One role of the fuel cell separator is to confer each unit cell with electrical conductivity. In addition, separators provide flow channels for the supply of fuel and air (oxygen) to the unit cells and also serve as boundary walls separating the unit cells.

Characteristics required of a separator thus include a high electrical conductivity, a high impermeability to gases, chemical stability, heat resistance and hydrophilicity.

Porous fuel cell separators that are used in "internal humidification" type solid polymer fuel cells also have, in addition to the above roles, the functions of moistening reaction gases and removing agglomerated product water within the cell. In these porous separators, during electrical generation by the fuel cell, pores in the separator are sealed by the water filling the pores, preventing the permeation of gases from the gas flow channels to the water flow channels. Therefore, in addition to the above characteristics, it is also desired that a porous separator have water-absorbing properties, water permeability and, when a gas pressure is applied in a water-impregnated state, gas impermeability.

However, water permeability and gas impermeability in a water-impregnated state are conflicting characteristics that have been difficult to reconcile.

Of these characteristics, known approaches for increasing the water permeability include the method disclosed in Patent Document 1.

Patent Document 1 relates to a method for producing a fuel cell separator that carries out hydrophilizing treatment with tin chloride and ammonium hydroxide.

Yet, the method of Patent Document 1 has the drawback that sufficient gas impermeability is not obtained in a water-impregnated state. Moreover, ammonium chloride that forms with hydrophilizing treatment remains within the separator and elutes out later on during operation of the fuel cell.

Patent Document 2 discloses a graphite/resin compound material.

Patent Document 3 discloses a porous separator for fuel cells.

PRIOR ART DOCUMENTS

PATENT DOCUMENTS

Patent Document 1: JP-A 2014-102969
Patent Document 2: WO 2005064721
Patent Document 3: EP2763223

SUMMARY OF INVENTION

TECHNICAL PROBLEM

It is therefore an object of this invention to provide a porous separator for fuel cells which, even without being subjected to special hydrophilizing treatment, is endowed with both high gas impermeability and good water permeability.

SOLUTION TO PROBLEM

The inventors have conducted extensive investigations in order to achieve this object. As a result, they have discovered that, by using a composition containing graphite powder having a specific springback and epoxy resin components, a separator that is endowed with both high gas impermeability and good water permeability can be obtained even without carrying out special hydrophilizing treatment.

Accordingly, the invention provides:

A porous separator for fuel cells according to claim 1.
A method for producing a porous separator for fuel cells according to claim 13.

Preferred features are set out in the dependent claims.

ADVANTAGEOUS EFFECTS OF INVENTION

Because the porous fuel cell separator of the invention requires no special hydrophilizing treatment, the separator is not contaminated by the elution of chemical components during fuel cell operation, as in cases where chemicals are used.

Moreover, the porous fuel cell separator, even though it is not subjected to hydrophilizing treatment, has a good water permeability and also a high gas leak pressure.

BRIEF DESCRIPTION OF THE DIAGRAMS

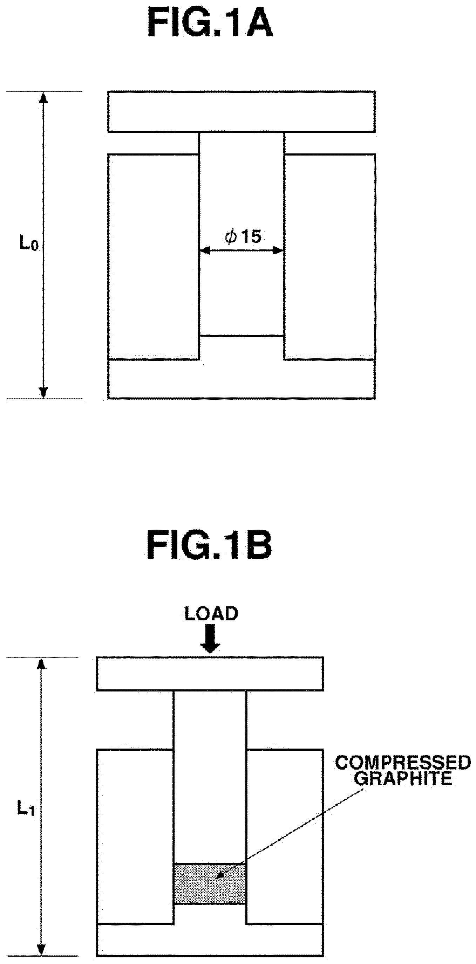

[FIG. 1] FIG. 1 shows schematic side views of a die that may be used to measure the springback of graphite powder.

DESCRIPTION OF EMBODIMENTS

The invention is described more fully below.

The porous fuel cell separator of the invention is obtained by molding a composition containing 100 parts by weight of graphite powder having a springback of between 40% and 100% and from 10.0 to 16.0 parts by weight of epoxy resin components that include a base resin, a curing agent and a curing accelerator, the porous fuel cell separator having

a gas leak pressure of 56 kPa or more and a water permeability of $800 \times 10^{-17}$ m$^2$ or more.

The graphite powder used in this invention is one having a springback for the overall powder of between 40% and 100%. By using graphite having a springback in this range, the pores in the resulting separator become uniform, resulting in good water permeability, water absorption and the like while maintaining the leak pressure of the separator.

At a springback below 40%, gaps between graphite powder particles tend to collapse during molding, making the pores smaller, as a result of which the water permeability may become lower. At a springback greater than 100%, the gaps between graphite powder particles widen at the completion of molding, making the pores larger, as a result of which the gas leak pressure may become lower.

As used herein, "springback" refers to springback by the powder itself. Specifically, as described in detail in the subsequent working examples, this is the value computed as [(Y-X) / X] $\times$ 100 (%), where X is the height of the powder when charged into a specific die and compressed under a specific pressure and Y is the height of the powder when the pressure is released.

The graphite powder of the invention is not particularly limited as to, for example, the type thereof so long as the powder as a whole satisfies the above springback. However, preferred use can be made of a graphite powder that includes synthetic graphite powder having a springback of between 40% and 100%.

The synthetic graphite powder used may be suitably selected from among ones that have hitherto been used in fuel cell separators. Examples include synthetic graphite obtained by firing needle coke and synthetic graphite obtained by firing vein coke. The springback of these synthetic graphites is measured by the subsequently described method; graphites for which the springback falls within the range specified in this invention may be suitably selected. These synthetic graphites may be used singly or two or more may be used in combination.

The average particle size (d = 50) of the synthetic graphite powder is not particularly limited. However, to increase the leak pressure of the resulting separator, the average particle size is preferably from 20 to 60 $\mu$m, and more preferably from 30 to 60 $\mu$m.

The specific surface area of the synthetic graphite is not particularly limited. However, to increase the leak pressure and water permeability coefficient of the resulting separator, the specific surface area is preferably from 2.0 to 7.0 m$^2$/g, and more preferably from 3.0 to 7.0 m$^2$/g. The specific surface area is a measured value based on nitrogen adsorption isotherms according to the BET method.

In this invention, so long as the springback of the overall graphite powder used can be adjusted to between 40% and 100%, graphite powder having a springback that does not satisfy the range of between 40% and 100% may be used together with synthetic graphite powder having the above-specified springback, or graphite powder having a springback of below 40% may be used in combination with graphite powder having a springback greater than 100%.

Examples of such graphite powders include natural graphite, synthetic graphite, graphite obtained by grinding electrodes to powder, coal pitch, petroleum pitch, coke, activated carbon, glassy carbon, acetylene black and ketjenblack. These may be used singly, or two or more may be used in combination.

In the graphite powder of the invention, the content ratio between synthetic graphite powder having a springback of between 40% and 100% and graphite powder that does not satisfy this condition is not particularly limited, so long as the springback of the graphite powder obtained by mixing both is between 40% and 100%. However, to do away with the trouble of having to adjust the springback, synthetic graphite powder with a springback of between 40% and 100% accounts for preferably more than 50 wt%, more preferably 70 wt% or more, even more preferably 90 wt% or more, and most preferably 100 wt%, of all the graphite powder.

The base resin serving as an epoxy resin component is not particularly limited, provided it has epoxy groups. Examples include o-cresol-novolak epoxy resin, phenol-novolak epoxy resin, bisphenol A epoxy resin, bisphenol F epoxy resin, biphenyl epoxy resin, biphenyl aralkyl epoxy resin, trisphenol epoxy resin, brominated epoxy resin, dicyclopentadiene epoxy resin and biphenyl-novolak epoxy resin. These may be used singly, or two or more may be used in combination. Of these, o-cresol-novolak epoxy resin and phenol-novolak epoxy resin are preferred; phenol-novolak epoxy resin is more preferred.

To further increase the heat resistance of the resulting separator, the epoxy equivalent weight of the epoxy resin is preferably from 158 to 800 g/eq, more preferably from 185 to 450 g/eq, and even more preferably from 190 to 290 g/eq.

The curing agent serving as an epoxy resin component is not particularly limited, provided it is a phenolic resin. Specific examples include novolak phenolic resins, cresol phenolic resins, alkyl-modified phenolic resins, biphenyl aralkyl epoxy resins and trisphenol epoxy resins. These may be used singly, or two or more may be used in combination. Of these, a novolak phenolic resin is preferred.

The hydroxyl equivalent weight of the phenolic resin is not particularly limited. However, to further increase the heat resistance of the resulting separator, it is preferably from 95 to 240 g/eq, and more preferably from 100 to 115 g/eq.

The curing accelerator serving as an epoxy resin component is not particularly limited, provided it accelerates the reaction between epoxy groups and the curing agent. Specific examples include triphenylphosphine, tetraphenylphosphine, diazabicycloundecene, dimethylbenzylamine, 2-methylimidazole, 2-methyl-4-imidazole, 2-phenylimidazole, 2-phenyl-4-methylimidazole, 2-undecylimidazole and 2-heptadecylimidazole. These may be used singly, or two or more may be used in combination. Of these, an imidazole compound is preferred.

The amount of curing accelerator used is not particularly limited, although it is preferably included in an amount of from 0.5 to 1.2 parts by weight per 100 parts by weight of the mixture of the epoxy resin and the phenolic resin.

In the invention, the overall content of epoxy resin components (base resin, curing agent and curing accelerator) in the porous fuel cell separator composition is set to from 10.0 to 16.0 parts by weight per 100 parts by weight of the graphite powder.

By using a graphite powder having a springback in the above-described range and setting the amount of epoxy resin components included in the foregoing range, a separator having a high leak pressure and excellent water permeability can be obtained.

In this case, it is preferable to include the phenolic resin in a hydroxyl equivalent weight with respect to the epoxy resin of between 0.98 and 1.08.

The porous fuel cell separator composition of the invention may also include an internal mold release agent. The internal mold release agent may be suitably selected from among various types of internal mold release agents hitherto used in the molding of separators. Specific examples include stearic acid wax, amide wax, montanic acid wax, carnauba wax and polyethylene wax. These may be used singly, or two or more may be used in combination.

When an internal mold release agent is used, the content thereof, although not particularly limited, is typically from 0.1 to 1.5 parts by weight, and especially from 0.3 to 1.0 part by weight, per 100 parts by weight of the graphite powder.

The porous fuel cell separator composition may be prepared by, for example, mixing the graphite powder, epoxy resin, phenolic resin and curing accelerator in any order and in the prescribed proportions. Illustrative examples of mixers that may be used for such mixing include planetary mixers, ribbon blenders, Loedige mixers, Henschel mixers, rocking mixers and Nauta mixers.

In cases where an internal mold release agent is used, it too may be added in any order.

The porous fuel cell separator of the invention can be obtained by charging the above composition into a given mold and compression molding. The mold used is exemplified by a mold for fuel cell separator production that is capable of forming, on one or both sides of the molded article, grooves to serve as gas flow channels.

The compression-molding conditions, although not particularly limited, are typically a mold temperature of between 80 and 200°C, a molding pressure of between 1.0 and 50 MPa, preferably between 5 and 40 MPa, and a molding time of between 10 seconds and 1 hour, preferably between 20 and 180 seconds.

After compression molding, heating at between 150 and 200°C for a period of between about 1 minute and about 600 minutes may be carried out to promote thermosetting.

The porous fuel cell separator obtained by compression molding may be subjected to surface roughening treatment in order to remove the skin layer and adjust the surface roughness.

The surface roughening method is not particularly limited and may be suitably selected from among various known surface roughening methods, such as blasting and polishing. Air blasting, wet blasting, barrel polishing and brush polishing are preferred, blasting treatment using an abrasive is more preferred, and wet blasting is even more preferred.

The abrasive that may be used in blasting at this time has an average particle size (d = 50) of preferably from 3 to 30 μm, more preferably from 4 to 25 μm, and even more preferably from 5 to 20 μm.

The material making up the abrasive used in blasting may be, for example, alumina, silicon carbide, zirconia, glass, nylon or stainless steel. These may be used singly, or two or more may be used in combination.

The discharge pressure during wet blasting fluctuates according to, for example, the particle size of the abrasive, and therefore cannot be strictly specified. However, the discharge pressure is preferably between 0.1 and 1 MPa, and more preferably between 0.15 and 0.5 MPa.

The porous fuel cell separator of the invention, even without being subjected to a special hydrophilizing treatment of the sort exemplified in the prior art, such as treatment using chemicals or plasma treatment, has a gas leak pressure of 56 kPa or more and a water permeability of $800 \times 10^{-17}$ $m^2$ or more.

In addition, the porous separator of the invention often has the following characteristics: a water absorption time of 10 seconds or less when 10 μL of water has been deposited on the bottom of a gas flow channel groove or the bottom of a cooling water groove in the molded separator, and a water absorption time of 45 seconds or less when 5 μL of water has been deposited on the separator sidewall.

Fuel cells equipped with the inventive porous fuel cell separator having such characteristics are able to maintain a stable power generation efficiency over a long period of time.

A solid polymer fuel cell is generally composed of a stack of many unit cells, each of which is constructed of a solid polymer membrane disposed between a pair of electrodes that are in turn sandwiched between a pair of separators which form flow channels for the supply and removal of gases. The porous fuel cell separator of the invention may be used as some or all of the plurality of separators in the fuel cell.

EXAMPLES

Working Examples and Comparative Examples are given below by way of illustration, although the invention is not limited by these Examples. The characteristics in the Examples were measured by the following methods. All measured values are indicated as the average of three measurements.

[1] Springback of Graphite Powder

Two grams of graphite powder as the sample was placed in the die having an inner diameter of 15 mm shown in FIG. 1A and the top surface of the sample was flattened, following which the powder was compressed by using a press to apply a 5.4-ton load to the punch over a period of 5 seconds (see FIG. 1B). The compressed state was held for 30 seconds, after which the load was quickly released. The height at the top of the punch was measured in each state with a height gauge and the springback was determined using the following formula.

$L_0$: Height of punch when die contains no sample (mm)
$L_1$: Height of punch when load has been applied (mm)
$L_2$: Height of punch when load has been released (mm)

$$\text{Springback } (\%) = [(L_2 - L_1) / (L_1 - L_0)] \times 100$$

[2] Average Particle Size

Measured with a particle size analyzer (Nikkiso Co., Ltd.).

[3] Leak Pressure

A sample was immersed for 8 hours in deionized water, thereby filling the pores of the sample with water, following which the peripheral edges of the sample were sealed with a sealant. Pressure was then applied to one side of the sample with a test gas (air) and the pressure was increased. The pressure when the test gas leaked from the surface on the opposite side of the sample was treated as the leak pressure.

[4] Water Permeability Coefficient

A sample was immersed for 8 hours in deionized water, thereby filling the pores of the sample with water, following which the peripheral edges of the sample were sealed with a sealant. Deionized water was applied to one side of the sample at a pressure of 14 kPa, and the amount of water that permeated from the surface on the opposite side of the sample over a period of 10 seconds was measured. The water permeability was determined using the following formula.

$$\text{Water permeability (m}^2) =$$

$$[\text{rate of permeation (m}^3/\text{sec}) \times \text{viscosity of water (Pa} \cdot \text{sec}) \times$$

$$\text{sample thickness (m)}] / [\text{water pressure (Pa)} \times \text{permeation cross-section (m}^2)]$$

[5] Water Absorption Time

(1) Thickness Direction

Using a motorized micropipette, a 10 $\mu$L droplet of deionized water was deposited on the top surface of a sample plate and the time taken for the deposited water to be completely absorbed into the sample was measured.

(2) In-Plane Direction

Using a motorized micropipette, a 5 $\mu$L droplet of deionized water was deposited on the sidewall of a sample plate and the time taken for the deposited water to be completely absorbed into the sample was measured.

[Working Example 1]

A porous fuel cell separator composition was prepared by charging a Henschel mixer with 100 parts by weight of synthetic graphite powder (average particle size: d50 = 35 $\mu$m; specific surface area, 4.2 g/m² (BET method); springback, 90%), 8.37 parts by weight of phenol-novolak epoxy resin (epoxy equivalent weight, 192 g/eq), 4.51 parts by weight of novolak phenolic resin (hydroxyl equivalent weight, 103 g/eq) and 0.12 part by weight of 2-phenylimidazole, then mixing these ingredients together for 3 minutes at 800 rpm.

The resulting composition was charged into a mold for producing fuel cell separators and compression-molded at a mold temperature of 185°C, a molding pressure of 5.2 MPa and a molding time of 30 seconds, thereby giving a porous molded sheet with dimensions of 240 mm $\times$ 240 mm $\times$ 2 mm having gas flow channels.

Next, a porous fuel cell separator was obtained by subjecting the entire surface of the resulting porous molded sheet to roughening treatment by wet blasting using alumina abrasive grit (average particle size, d50 = 6 $\mu$m) under the following conditions: discharge pressure, 0.25 MPa; transport speed, 1.5 m/min.

[Working Example 2]

Aside from changing the phenol-novolak epoxy resin to 6.45 parts by weight, the novolak phenolic resin to 3.50 parts by weight and the 2-phenylimidazole to 0.09 part by weight per 100 parts by weight of the synthetic graphite powder, a porous fuel cell separator was obtained by preparing and compression-molding a composition in the same way as in Working Example 1.

[Working Example 3]

Aside from changing the phenol-novolak epoxy resin to 7.40 parts by weight, the novolak phenolic resin to 4.00 parts by weight and the 2-phenylimidazole to 0.11 part by weight per 100 parts by weight of the synthetic graphite powder, a porous fuel cell separator was obtained by preparing and compression-molding a composition in the same way as in Working Example 1.

[Working Example 4]

Aside from changing the phenol-novolak epoxy resin to 9.30 parts by weight, the novolak phenolic resin to 5.06 parts by weight and the 2-phenylimidazole to 0.14 part by weight per 100 parts by weight of the synthetic graphite powder, a porous fuel cell separator was obtained by preparing and compression-molding a composition in the same way as in Working Example 1.

[Working Example 5]

Aside from changing the phenol-novolak epoxy resin to 10.29 parts by weight, the novolak phenolic resin to 5.56 parts by weight and the 2-phenylimidazole to 0.15 part by weight per 100 parts by weight of the synthetic graphite powder, a porous fuel cell separator was obtained by preparing and compression-molding a composition in the same way as in Working Example 1.

[Comparative Example 1]

Aside from changing the phenol-novolak epoxy resin to 6.10 parts by weight, the novolak phenolic resin to 3.30 parts by weight and the 2-phenylimidazole to 0.09 part by weight per 100 parts by weight of the synthetic graphite powder, a porous fuel cell separator was obtained by preparing and compression-molding a composition in the same way as in Working Example 1.

[Comparative Example 2]

Aside from changing the phenol-novolak epoxy resin to 10.90 parts by weight, the novolak phenolic resin to 5.95 parts by weight and the 2-phenylimidazole to 0.15 part by weight per 100 parts by weight of the synthetic graphite powder, a porous fuel cell separator was obtained by preparing and compression-molding a composition in the same way as in Working Example 1.

[Comparative Example 3]

Aside from changing the synthetic graphite powder used in Working Example 1 to a different synthetic graphite powder (average particle size: d50 = 35 $\mu$m; specific surface area, 4.2 g/m$^2$ (BET method); springback, 20%) and changing the phenol-novolak epoxy resin to 6.45 parts by weight, the novolak phenolic resin to 3.50 parts by weight and the 2-phenylimidazole to 0.09 part by weight per 100 parts by weight of the synthetic graphite powder, a porous fuel cell separator was obtained by preparing and compression-molding a composition in the same way as in Working Example 1.
The leak pressure, water permeability coefficient and water absorption time were measured for each of the porous fuel cell separators obtained in Working Examples 1 to 5 and Comparative Examples 1 to 3. The results are shown in Table 1.

[Table 1]

|  | Working Example | | | | | Comparative Example | | |
|---|---|---|---|---|---|---|---|---|
|  | 1 | 2 | 3 | 4 | 5 | 1 | 2 | 3 |
| Amount of graphite added (pbw) | 100 | 100 | 100 | 100 | 100 | 100 | 100 | 100 |
| Graphite particle size ($\mu$m) | 35 | 35 | 35 | 35 | 35 | 35 | 35 | 35 |
| Graphite specific surface area (m$^2$/g) | 4.2 | 4.2 | 4.2 | 4.2 | 4.2 | 4.2 | 4.2 | 4.2 |
| Graphite springback (%) | 90 | 90 | 90 | 90 | 90 | 90 | 90 | 20 |
| Amount of resin components added (pbw) | 13 | 10 | 11.5 | 14.5 | 16 | 9.5 | 17 | 10 |
| Leak pressure (kPa) | 64 | 57 | 61 | 69 | 72 | 53 | 77 | 56 |
| Water permeability coefficient ($10^{-17}$ m$^2$) | 2,000 | 3,000 | 2,500 | 1,200 | 900 | 3,500 | 495 | 750 |
| Water absorption time, thickness direction (sec) | 2 | 1 | 1 | 2 | 4 | 1 | 42 | 10 |
| Water absorption time, in-plane direction (sec) | 28 | 15 | 21 | 36 | 44 | 13 | 52 | 70 |

As shown in Table 1, the separators in Working Examples 1 to 5 obtained from compositions for which the graphite springback and the amount of resin addition were within the ranges specified in this invention had leak pressures of 56 kPa or more and water permeability coefficients of $800 \times 10^{-17}$ m$^2$ or more, and thus were found to exhibit good values as porous fuel cell separators.
The separator in Comparative Example 1 used a composition in which the amount of resin components added was less than 10 parts by weight, and thus was found to have a low leak pressure.

The separator in Comparative Example 2 used a composition in which the amount of resin components added was more than 16.0 parts by weight, and thus was found to have a low water permeability coefficient and a long water absorption time in the in-plane direction.

The separator in Comparative Example 3 used a composition which contained graphite powder having a springback of 20%, and thus was found to have a low water permeability coefficient and a long water absorption time in the in-plane direction.

[Working Example 6]

Aside from changing the synthetic graphite powder used in Working Example 1 to a different synthetic graphite powder (average particle size: d50 = 35 $\mu$m; specific surface area, 3.2 g/m$^2$ (BET method); springback, 42%), a porous fuel cell separator was obtained by preparing and compression-molding a composition in the same way as in Working Example 1.

[Working Example 7]

Aside from changing the synthetic graphite powder used in Working Example 1 to a different synthetic graphite powder (average particle size: d50 = 35 $\mu$m; specific surface area, 5.1 g/m$^2$ (BET method); springback, 65%), a porous fuel cell separator was obtained by preparing and compression-molding a composition in the same way as in Working Example 1.

[Working Example 8]

Aside from changing the synthetic graphite powder used in Working Example 1 to a different synthetic graphite powder (average particle size: d50 = 35 $\mu$m; specific surface area, 6.0 g/m$^2$ (BET method); springback, 80%), a porous fuel cell separator was obtained by preparing and compression-molding a composition in the same way as in Working

Example 1.

[Working Example 9]

Aside from changing the synthetic graphite powder used in Working Example 1 to a different synthetic graphite powder (average particle size: d50 = 35 $\mu$m; specific surface area, 6.9 g/m$^2$ (BET method); springback, 95%), a porous fuel cell separator was obtained by preparing and compression-molding a composition in the same way as in Working

Example 1.

[Working Example 10]

Aside from changing the synthetic graphite powder used in Working Example 1 to a different synthetic graphite powder (average particle size: d50 = 25 $\mu$m; specific surface area, 5.2 g/m$^2$ (BET method); springback, 98%), a porous fuel cell separator was obtained by preparing and compression-molding a composition in the same way as in Working

Example 1.

[Working Example 11]

Aside from changing the synthetic graphite powder used in Working Example 1 to a different synthetic graphite powder (average particle size: d50 = 55 $\mu$m; specific surface area, 4.2 g/m$^2$ (BET method); springback, 90%), a porous fuel cell separator was obtained by preparing and compression-molding a composition in the same way as in Working

Example 1.

[Comparative Example 4]

Aside from changing the synthetic graphite powder used in Working Example 1 to a different synthetic graphite powder (average particle size: d50 = 35 $\mu$m; specific surface area, 1.8 g/m$^2$ (BET method); springback, 30%), a porous fuel cell separator was obtained by preparing and compression-molding a composition in the same way as in Working

Example 1.

[Comparative Example 5]

Aside from changing the synthetic graphite powder used in Working Example 1 to a different synthetic graphite powder (average particle size: d50 = 35 $\mu$m; specific surface area, 7.3 g/m$^2$ (BET method); springback, 110%), a porous fuel cell separator was obtained by preparing and compression-molding a composition in the same way as in Working Example 1.

The leak pressure, water permeability coefficient and water absorption time were measured for each of the porous fuel cell separators obtained in Working Examples 6 to 11 and Comparative Examples 4 and 5. The results are shown in Table 2.

[Table 2]

| | Working Example | | | | | | Comparative Example | |
|---|---|---|---|---|---|---|---|---|
| | 6 | 7 | 8 | 9 | 10 | 11 | 4 | 5 |
| Amount of graphite added (pbw) | 100 | 100 | 100 | 100 | 100 | 100 | 100 | 100 |
| Graphite particle size ($\mu$m) | 35 | 35 | 35 | 35 | 25 | 55 | 35 | 35 |
| Graphite specific surface area (m$^2$/g) | 3.2 | 5.1 | 6.0 | 6.9 | 5.2 | 4.2 | 1.8 | 7.3 |
| Graphite springback (%) | 42 | 65 | 80 | 95 | 98 | 90 | 30 | 110 |
| Amount of resin components added (pbw) | 13 | 13 | 13 | 13 | 13 | 13 | 13 | 13 |
| Leak pressure (kPa) | 61 | 62 | 58 | 56 | 68 | 57 | 64 | 48 |
| Water permeability coefficient ($10^{-17}$ m$^2$) | 850 | 1,380 | 1,900 | 2,600 | 1,400 | 3,200 | 610 | 3,500 |
| Water absorption time, thickness direction (sec) | 4 | 1 | 1 | 1 | 4 | 1 | 41 | 1 |
| Water absorption time, in-plane direction (sec) | 36 | 20 | 16 | 11 | 40 | 19 | 51 | 11 |

As shown in Table 2, the separators in Working Examples 6 to 11 obtained from compositions for which the graphite springback and the amount of resin addition were within the ranges specified in this invention had leak pressures of 56 kPa or more and water permeability coefficients of $800 \times 10^{-17}$ m$^2$ or more, and thus were found to exhibit good values as porous fuel cell separators.

The separator in Comparative Example 4 used a composition which contained graphite powder having a springback of 30%. Hence, gaps between graphite powder particles tended to collapse during molding, and so the pores became smaller. As a result, the separator was found to have a low water permeability coefficient and a long water absorption time in the in-plane direction.

The separator in Comparative Example 5 used a composition containing graphite powder having a springback of 110%. Hence, the gaps between graphite powder particles widened at the completion of molding, and so the pores became larger. As a result, the separator was found to have a low leak pressure.

**Claims**

1. A porous separator for fuel cells which is obtained by molding a composition comprising 100 parts by weight of graphite powder and from 10.0 to 16.0 parts by weight of epoxy resin components that include a base resin, a curing agent and a curing accelerator, the porous fuel cell separator having a gas leak pressure of 56 kPa or more as measured by the method of the description and
**characterized in that** the graphite powder has a springback of between 40% and 100% as measured by the method of the description and the porous separator has a water permeability of $800 \times 10^{-17}$ m$^2$ or more as measured by the method of the description.

2. The porous fuel cell separator of claim 1, wherein the graphite powder includes synthetic graphite having a springback of between 40% and 100%.

3. The porous fuel cell separator of claim 2, wherein the content of synthetic graphite powder within the graphite powder is 100 wt%.

4. The porous fuel cell separator of any one of claims 1 to 3 which is subjected to surface roughening treatment.

5. The porous fuel cell separator of any one of claims 1 to 4 which has a water absorption time when 5 $\mu$L of water has been deposited on the separator sidewall of 45 seconds or less as measured by the method of the description.

6. The porous fuel cell separator of any one of claims 1 to 5, wherein the base resin is a phenol-novolak epoxy resin.

7. The porous fuel cell separator of any one of claims 1 to 6, wherein the curing agent is novolak phenolic resin.

8. The porous fuel cell separator of any one of claims 1 to 7, wherein the curing accelerator is an imidazole compound.

9. The porous fuel cell separator of any one of the preceding claims, wherein the average particle size of synthetic graphite powder is from 20 to 60 as measured by the method of the description.

10. The porous fuel cell separator of any one of the preceding claims, wherein the specific surface area of synthetic graphite is from 2.0 to 7.0 m$^2$/g, measured using nitrogen absorption isotherms according to the BET method.

11. The porous fuel cell separator of any one of the preceding claims, wherein the epoxy resin has an epoxy equivalent weight of from 158 to 800 g/eq.

12. The porous fuel cell separator of any one of the preceding claims, wherein the phenolic resin has a hydroxyl equivalent weight of from 95 to 240 g/eq.

13. A method for producing a porous separator for fuel cells, comprising the step of compression-molding a composition comprised of 100 parts by weight of graphite powder and from 10.0 to 16.0 parts by weight of epoxy resin components that include a base resin, a curing agent and a curing accelerator;
wherein the porous fuel cell separator has a gas leak pressure of 56 kPa or more as measured by the method of the description;
**characterized in that** the graphite powder has a springback of between 40% and 100% as measured by the method of the description and the porous separator has a water permeability of 800 $\times$ 10$^{-17}$ m$^2$ or more as measured by the method of the description.

14. The method of claim 13, which produces a porous fuel cell separator according to any one of claims 1 to 12.

**Patentansprüche**

1. Poröser Separator für Brennstoffzellen, der durch Formen einer Zusammensetzung erhalten wird, die 100 Gewichtsteile Graphitpulver und 10,0 bis 16,0 Gewichtsteile Epoxidharzkomponenten umfasst, die ein Basisharz, ein Härtungsmittel und einen Härtungsbeschleuniger umfassen, wobei der poröse Brennstoffzellenseparator einen durch das Verfahren der Beschreibung gemessenen Gasleckdruck von 56 kPa oder mehr aufweist, und
**dadurch gekennzeichnet, dass** das Graphitpulver eine durch das Verfahren der Beschreibung gemessene Rückfederung zwischen 40 % und 100 % aufweist und der poröse Separator eine durch das Verfahren der Erfindung gemessene Wasserdurchlässigkeit von 800 $\times$ 10$^{-17}$ m$^2$ oder mehr aufweist.

2. Poröser Brennstoffzellenseparator nach Anspruch 1, wobei das Graphitpulver synthetisches Graphit mit einer Rückfederung zwischen 40 % und 100 % umfasst.

3. Poröser Brennstoffzellenseparator nach Anspruch 2, wobei der Gehalt an synthetischem Graphitpulver im Graphitpulver 100 Gew.-% beträgt.

4. Poröser Brennstoffzellenseparator nach einem der Ansprüche 1 bis 3, der einer Oberflächenaufrauungsbehandlung unterzogen ist.

5. Poröser Brennstoffzellenseparator nach einem der Ansprüche 1 bis 4, der nach Ablagerung von 5 $\mu$l Wasser an

der Separatorseitenwand eine durch das Verfahren der Beschreibung gemessene Wasserabsorptionszeit von 45 Sekunden oder weniger aufweist.

6. Poröser Brennstoffzellenseparator nach einem der Ansprüche 1 bis 5, wobei das Basisharz ein Phenol-Novolak-Epoxidharz ist.

7. Poröser Brennstoffzellenseparator nach einem der Ansprüche 1 bis 6, wobei das Härtungsmittel ein Novolak-Phenolharz ist.

8. Poröser Brennstoffzellenseparator nach einem der Ansprüche 1 bis 7, wobei der Härtungsbeschleuniger eine Imidazolverbindung ist.

9. Poröser Brennstoffzellenseparator nach einem der vorangegangenen Ansprüche, wobei die durch das Verfahren der Beschreibung gemessene durchschnittliche Teilchengröße des synthetischen Graphitpulvers 20 bis 60 beträgt.

10. Poröser Brennstoffzellenseparator nach einem der vorangegangenen Ansprüche, wobei die unter Verwendung von Stickstoffabsorptionsisothermen gemäß dem BET-Verfahren gemessene spezifische Oberfläche des synthetischen Graphits 2,0 bis 7,0 $m^2$/g beträgt.

11. Poröser Brennstoffzellenseparator nach einem der vorangegangenen Ansprüche, wobei das Epoxidharz eine Epoxyäquivalentgewicht von 158 bis 800 g/Äqu. aufweist.

12. Poröser Brennstoffzellenseparator nach einem der vorangegangenen Ansprüche, wobei das Phenolharz ein Hydroxyl-Äquivalentgewicht von 95 bis 240 g/Äqu. aufweist.

13. Verfahren zur Herstellung eines porösen Separators für Brennstoffzellen, das den Schritt des Formpressens einer Zusammensetzung umfasst, die aus 100 Gewichtsteilen Graphitpulver und 10,0 bis 16,0 Gewichtsteilen Epoxidharzkomponenten besteht, die ein Basisharz, ein Härtungsmittel und einen Härtungsbeschleuniger umfassen;

   wobei der poröse Brennstoffzellenseparator einen durch das Verfahren der Beschreibung gemessenen Gasleckdruck von 56 kPa oder mehr aufweist;
   **dadurch gekennzeichnet, dass** das Graphitpulver eine durch das Verfahren der Beschreibung gemessene Rückfederung zwischen 40 % und 100 % aufweist und der poröse Separator eine durch das Verfahren der Beschreibung gemessene Wasserdurchlässigkeit von 800 $\times$ $10^{-17}$ $m^2$ oder mehr aufweist.

14. Verfahren nach Anspruch 13, das einen porösen Brennstoffzellenseparator nach einem der Ansprüche 1 bis 12 ergibt.

**Revendications**

1. Séparateur poreux pour piles à combustible qui est obtenu par moulage d'une composition comprenant 100 parties en poids de poudre de graphite et de 10,0 à 16,0 parties en poids de composants de résine époxy qui incluent une résine de base, un agent de durcissement et un accélérateur de durcissement, le séparateur poreux pour piles à combustible présentant une pression de fuite de gaz de 56 kPa ou plus telle que mesurée par le procédé de la description et
est **caractérisé en ce que** la poudre de graphite présente un retour élastique compris entre 40 % et 100 % tel que mesuré par le procédé de la description et le séparateur poreux présente une perméabilité à l'eau de 800 $\times$ $10^{-17}$ $m^2$ ou plus telle que mesurée par le procédé de la description.

2. Séparateur poreux pour piles à combustible selon la revendication 1, dans lequel la poudre de graphite comporte du graphite synthétique présentant un retour élastique compris entre 40 % et 100 %.

3. Séparateur poreux pour piles à combustible selon la revendication 2, dans lequel la teneur en poudre de graphite synthétique dans la poudre de graphite est de 100 % en poids.

4. Séparateur poreux pour piles à combustible selon l'une quelconque des revendications 1 à 3, qui est soumis à un traitement de rugosification de surface.

**5.** Séparateur poreux pour piles à combustible selon l'une quelconque des revendications 1 à 4, qui présente un temps d'absorption d'eau lorsque 5 μL d'eau ont été déposés sur la paroi latérale du séparateur de 45 secondes ou moins tel que mesuré par le procédé de la description.

**6.** Séparateur poreux pour piles à combustible selon l'une quelconque des revendications 1 à 5, dans lequel la résine de base est une résine époxy de phénol-novolaque.

**7.** Séparateur poreux pour piles à combustible selon l'une quelconque des revendications 1 à 6, dans lequel l'agent de durcissement est une résine phénolique novolaque.

**8.** Séparateur poreux pour piles à combustible selon l'une quelconque des revendications 1 à 7, dans lequel l'accélérateur de durcissement est un composé imidazole.

**9.** Séparateur poreux pour piles à combustible selon l'une quelconque des revendications précédentes, dans lequel la taille moyenne de particules de poudre de graphite synthétique est de 20 à 60 telle que mesurée par le procédé de la description.

**10.** Séparateur poreux pour piles à combustible selon l'une quelconque des revendications précédentes, dans lequel la surface spécifique du graphite synthétique est de 2,0 à 7,0 m$^2$/g, mesurée en utilisant des isothermes d'absorption d'azote selon le procédé BET.

**11.** Séparateur poreux pour piles à combustible selon l'une quelconque des revendications précédentes, dans lequel la résine époxy présente un poids équivalent d'époxy qui est de 158 à 800 g/éq.

**12.** Séparateur poreux pour piles à combustible selon l'une quelconque des revendications précédentes, dans lequel la résine phénolique présente un poids équivalent d'hydroxyle de 95 à 240 g/éq.

**13.** Procédé de production d'un séparateur poreux pour piles à combustible, comprenant l'étape de moulage par compression d'une composition composée de 100 parties en poids de poudre de graphite et de 10,0 à 16,0 parties en poids de composants de résine époxy qui incluent une résine de base, un agent de durcissement et un accélérateur de durcissement ;

dans lequel le séparateur poreux pour piles à combustible présente une pression de fuite de gaz de 56 kPa ou plus telle que mesurée par le procédé de la description ;
**caractérisé en ce que** la poudre de graphite présente un retour élastique compris entre 40 % et 100 % tel que mesuré par le procédé de la description et le séparateur poreux présente une perméabilité à l'eau de 800 × 10$^{-17}$ m$^2$ ou plus telle que mesurée par le procédé de la description.

**14.** Procédé selon la revendication 13, qui produit un séparateur pour piles à combustible selon l'une quelconque des revendications 1 à 12.

# FIG.1A

$L_0$

$\phi 15$

# FIG.1B

LOAD

$L_1$

COMPRESSED
GRAPHITE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014102969 A
- WO 2005064721 A
- EP 2763223 A